# EUROPEAN PATENT SPECIFICATION

(11) **EP 2 944 660 B1**
(45) Date of publication and mention of the grant of the patent: **22.02.2017**
(21) Application number: 14001738.5
(22) Date of filing: 16.05.2014
(51) Int. Cl.: C08G 18/76, C08G 18/10, C08G 18/32, C08G 18/42, C09J 175/06

(54) **Thermoplastic Polyurethane**
Thermoplastisches Polyurethan
Polyuréthane thermoplastique

(43) Date of publication of application: 18.11.2015
(73) Proprietor: Henkel AG & Co. KGaA, 40589 Düsseldorf (DE)
(72) Inventor: Slark, Andrew, Wokingham, Berkshire SL25DS (GB); Krlejova, Andrea, 40210 Düsseldorf (DE); Kasper, Dirk, 40597 Düsseldorf (DE)

(56) References cited:
- US-B1- 6 465 539
- US-B2- 7 012 115

## Description

The invention relates to a specific thermoplastic polyurethane (TPU), a hot melt adhesive composition comprising this TPU, a method of applying this hot melt adhesive composition to a substrate and the use thereof in bookbinding, wood bonding, flat lamination, flexible packaging, profile wrapping, edge banding, textile lamination, low pressure molding and shoes.

TPUs are known in the art and can be used in a variety of products. TPUs are typically multiblock copolymers that are produced by a one step or two step reaction (polyaddition) of a linear polymer glycol, an isocyanate and a low molecular weight diol having in general two primary OH groups as a chain extender for example 1,4-butanediol. Common TPUs have good toughness, strength, abrasion resistance, transparency, low temperature flexibility, and chemical resistance. These physical properties can be adapted to desirable end uses. For example TPUs can be used in hot melt adhesive composition which can optionally contain further additives.

Although the mechanical properties of these TPU materials are good, the materials are difficult to process. They require processing temperatures of higher than 160 °C, typically 180 to 220 °C and they have very high melt viscosity, typically more than 100,000 to 500,000 mPas in this high temperature range. In order to melt these materials, so that they are sufficiently soft to be able to flow for application, both high temperatures and high shear rates are required. Therefore, expensive extruders are used to process these TPU - both in the manufacture of these TPU and the use of these TPU. In addition, these polymers have low thermal stability, i.e., when they are kept at high processing temperatures for a longer time, the polymer chains degrade to a lower molecular weight resulting in a substantial reduction in both melt viscosity and mechanical properties. As a result of the very high viscosity, the high shear rates in manufacture and the poor thermal stability, these TPU cannot be used in standard application equipment for typical thermoplastic hot melt adhesives.

Adhesive compositions based on TPU are known in the art. For examples prior art document WO 2011169012 A1 discloses the use of a hot melt adhesive as a laminating adhesive, wherein said hot melt adhesive has a viscosity of 10000 mPas to 150000 mPas at 140 °C and contains at least 75 wt.-% of a thermoplastic polyurethane (TPU) having a mean molecular weight of 5000 to 40000 g/mol.

It is an object of the present invention to provide a TPU, which provides when used as basis for a hot melt adhesive a low application viscosity in combination with a high level of adhesion and/or cohesion. Moreover, a further object of the present invention is the provision of a hot melt adhesive based on TPU which does not require an extruder to apply the hot melt adhesive composition. In this regard it has been surprisingly found that hot melt adhesive composition according to the present invention can be used in standard processing equipment, without the need of high heat and shear, used to process common thermoplastic hot melt adhesives such as polyolefins, rubbers, EVA, and acrylics.

These objects are solved by a TPU according to the invention which is obtainable by the specific method as defined in the claims.

A thermoplastic hot melt adhesive according to the invention is meltable but it is essentially free of reactive functional groups which may crosslink after application. The hot melt adhesive composition according to the invention shall comprise at least one thermoplastic polyurethane according to the invention (TPU) and optionally further additives which will be defined in detail below.

In the present specification the terms "a" and "an" and "at least one" are the same as the term "one or more" and can be employed interchangeably.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, 0.1 wt.-%, based on the total weight of the composition, wherein the amounts are respectively more preferred in descending order. For example, 4 wt.-% is more preferred than 5 wt.-% and 3 wt.-% is more preferred than 4 wt.-%.

The term "substantially" within the context of this invention is to be interpreted as the respective compound is contained in the composition in an amount of more than 95 wt.-%, 96 wt.-%, 97 wt.-%, 98 wt.-%, 99 wt.-%, and 99.5 wt.-%, based on the total weight of the composition, wherein the amounts are respectively more preferred in ascending order. For example, 98 wt.-% is more preferred than 97 wt.-% and 97 wt.-% is more preferred than 96 wt.-%.

The term "about" within the context of this invention is to be interpreted as ± 2%, ± 1%, ± 0.75%, ± 0.5%, ± 0.25%, ± 0.1% of the amount which respectively follows the term about, wherein the amounts are respectively more preferred in descending order.

The abbreviation "TPU" is to be interpreted to mean "at least one TPU" unless explicitly stated otherwise.

In particular, the present invention relates to a thermoplastic polyurethane, wherein the thermoplastic polyurethane is obtainable by a method comprising the steps of
a) reacting a mixture comprising at least one polyester polyol and at least one polyisocyanate; and
b) reacting the reaction product of step a) with at least one substituted or unsubstituted diol which contains at least a primary and a secondary OH group.

Furthermore, the present invention relates to a hot melt composition comprising the thermoplastic polyurethane according to the invention.

Moreover, the invention relates to a method of applying a hot melt adhesive composition according to the present invention to a substrate, comprising the steps of
1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

Additionally the present invention relates to the use of the hot melt adhesive composition according to the present invention in bookbinding, wood bonding, flat lamination, flexible packaging, profile wrapping, edge banding, textile lamination, low pressure molding, and shoes.

Further preferred embodiments of the present invention are set out in the dependent claims.

An hot melt adhesive composition according to the present invention must contain at least one TPU which is obtainable according to the steps as set out in the claims.

In preferred embodiments the hot melt adhesive composition according to the present invention comprises a TPU according to the invention which has a number average molecular weight (Mₙ) of at least 25,000 g/mol (TPU (A)); and a TPU according to the invention which has a number average molecular weight (Mn) of less than 25,000 g/mol (TPU (B)). This hot melt adhesive composition can preferably have weight ratio of (A) to (B) of 5:95 to 95:5. In preferred embodiments (A) has a number average molecular weight (Mn) of at least 30,000 g/mol, preferably at least 35,000 g/mol. In further preferred embodiments (B) has a number average molecular weight (Mn) of less than 20,000 g/mol, preferably less than 15,000 g/mol.

The polyurethane is formed of at least a polyester polyol, at least a polyisocyanate and at least a specific diol. As starting materials respective compounds known to the skilled person in the field of thermoplastic polyurethanes can be used.

The at least one TPU according to the present invention has a number average molecular weight (Mₙ, measured by GPC) of 2,500 to 80,000 g/mol. In more preferred embodiments the Mₙ is in a range having any combination of a lower limit selected from 3,000, 5,000, 7,500, 10,000, 15,000, 20,000, 25,000, 30,000, and 35,000 g/mol and an upper limit selected from 75,000, 70,000, 60,000, 50,000, 40,000, 35,000, 30,000, 25,000, and 20,000 g/mol. In even more preferred embodiments the range is 5,000 to 40,000 g/mol. In most preferred embodiments the range is 10,000 to 30,000 g/mol.

In step a) the molar ratio of the NCO groups of the polyisocyanate to the OH groups of the polyester polyol is preferably 1.1 : 1 to 3.0 : 1, more preferably 1.5 : 1 to 2.5 : 1.

In step b) the molar ratio of the NCO groups of the compound obtained in step a) to the OH groups of the at least one substituted or unsubstituted diol which contains at least a primary and a secondary OH group is preferably less than 1.0 : 1 , more preferably 0.5 :1 to 0.95 :1, most preferably 0.65 : 1 to 0.90 : 1.

Main components of the TPU according to the invention are polyester polyols. These shall include crystalline or semi-crystalline polyester polyols which are in the present invention referred to as semi-crystalline polyester polyols, and non-crystalline polyester polyols which include liquid polyester polyols and solid amorphous polyester polyols. Polyester polyols are well known to the skilled person and they can be obtained by a reaction of polycarboxylic acids and polyols. Thereby it is possible to include small amounts of three-functional alcohols or carboxylic acids in the reactions in order to incorporate branching without crosslinking. To obtain linear polyester polyols it is preferred that most of the monomers are difunctional components. The properties of the polyester polyols can be adjusted according to the type of comonomers. It is well known to the skilled person how to prepare semi-crystalline and non-crystalline polyester polyols. The polyester shall contain at least two hydroxyl groups. The properties of the polyester can be designed by the different components. For example, a single linear aliphatic diol and a linear aliphatic diacid will tend to provide semi-crystalline polymers. Increasing melting point can be obtained by increasing the length of the carbon chain in the diacid or by using symmetrical aromatic diacids. More amorphous materials can be obtained by increasing the number of comonomers or incorporating branched aliphatic comonomers. The polyester polyols can comprise further functional groups like NH or COOH which can also react with the one or more isocyanates. Suitable monomers for the preparation are described below.

Suitable polyester polyols are formed through the condensation of one or more polyhydric alcohols having preferably from 2 to 30 carbon atoms with one or more polycarboxylic acids having preferably from 2 to 14 carbon atoms. Suitable polyols include alkylene diols, in particular linear alcohols with 2 to 30 C atoms, which exhibit up to four preferably two OH groups; glycol ethers; and alicyclic polyols. Examples of suitable polyhydric alcohols include ethylene glycol, propylene glycol such as 1,2-propylene glycol and 1,3-propylene glycol, glycerol, pentaerythritol, trimethylolpropane, butanediol, pentanediol, hexanediol, dodecanediol, octanediol, chloropentanediol, glycerol monoallyl ether, glycerol monoethyl ether, diethylene glycol, 2-ethylhexanediol, 1,4-cyclohexanediol, 1,2,6-hexanetriol, 1,3,5-hexanetriol, 1,3-bis-(2-hydroxyethoxy)propane and the like. The polyols can be used separately or in mixture. They preferably have a molecular weight from 100 to 750 g/mol, their functionality is preferably 2 or 3.

Examples of polycarboxylic acids include ortho-phthalic acid, iso-phthalic acid, terephthalic acid, tetrachlorophthalic acid, maleic acid, dodecylmaleic acid, octadecenylmaleic acid, fumaric acid, aconitic acid, trimellitic acid, tricarballylic acid, 3,3'-thiodipropionic acid, succinic acid, adipic acid, suberic acid, azelaic acid, malonic acid, glutaric acid, pimelic acid, sebacic acid, cyclohexane-1,2-dicarboxytic acid, 1,4-cyclohexadiene-1,2-dicarboxylic acid, 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Dimer fatty acids can also be used, where they are the dimerization product of mono- or polyunsaturated acids and/or esters thereof. Preferred dimer fatty acids are dimers of C10 to C30, more preferably C14 to C22 carbon acids. Suitable dimer fatty acids include the dimerization products of oleic acid, linoleic acid, linolenic acid, palmitoleic acid and elaidic acid. The dimerization products of the unsaturated fatty acid mixtures obtained in the hydrolysis of natural fats and oils, e.g., sunflower oil, soybean oil, olive oil, rapeseed oil, cottonseed oil and tall oil may also be used. In addition to the dimer fatty acids, dimerization usually results in varying amounts of oligomeric fatty acids and residues of monomeric fatty acids. Suitable dimer fatty acids have a dimer acid content greater than 75 wt.% based on the total weight of the dimer fatty acid starting material.

Further suitable polyester polyols are polycarbonate polyols. Polycarbonate polyols can be received for example by the reaction from diols, like propylene glycol, butanediol-1,4 or hexenediol-1,6, diethyleneglycol, triethyleneglycol or mixtures from two or more from it with diarylcarbonates. Polyesters on the basis of ε- caprolactone are also suitable. Also polyester polyols are suitable, which contain one or more urethane groups in the polymer chain.

Other useful polyester polyols include, e.g., polyols derived from oleochemicals, and the complete ring opening of epoxidized triglycerides of an at least partially olefinic unsaturated fatty acid-containing fat mixture and at least one alcohol containing from 1 carbon atom to 12 carbon atoms, followed by partial transesterification of the triglyceride derivatives to form alkyl ester polyols having from 1 carbon atom to 12 carbon atoms in the alkyl chain.

Commercially available polyester polyols which may be used in the practice of the invention include semi-crystalline or non-crystalline polyesters. For this invention it shall be understood, that the term polyester polyol shall include also polyester, which comprise at the end of the polymer chain amino groups or carboxylic groups. But the preferred group of such polyester are polyester diols.

Preferred polycarboxylic acids are the aliphatic and cycloaliphatic dicarboxylic acids containing no more than 14 carbon atoms and the aromatic dicarboxylic acids containing no more than 14 atoms. In more preferred embodiments the at least one polyester polyol comprises an ortho-phthalate. It should be understood that "comprising ortho-phthalate" in this context is to be interpreted that the term "ortho-phthalate" also includes derivatives thereof, i.e. the polyester polyol is obtained by reacting a mixture including, at least one of ortho-phthalate, phthalic anhydride, or derivatives thereof or combinations thereof. In even more preferred embodiments, the ortho-phthalate is comprised in the polyester polyol according to item b). In most preferred embodiments the ortho-phthalate is comprised in the polyester polyol according to item c).

The TPU preferably comprises a polyester polyol in step a) which has a number average molecular weight (Mₙ) of 200 to 10,000 g/mol. In more preferred embodiments the Mn is in a range having any combination of a lower limit selected from 250, 500, 750, 1,000, 2,000, 3,000, 4,000, 5,000, and 7,500 g/mol and an upper limit selected from 10,000, 9,000, 8,000, 7,000, 6,000, 5,000, 4,000, 3,000, 2,000, 1,000, 750, and 500 g/mol. The Mₙ is more preferably 500 to 5,000 g/mol, most preferably 500 to 3,000 g/mol.

In more preferred embodiments the TPU comprises at least one non-crystalline polyester polyol. These non-crystalline polyester polyols have preferably a glass transition temperature (Tg) from 50 to -70 °C, more preferably from 30 to - 60 °C, most preferably from 20 to -50 °C. The non-crystalline polyester polyols can preferably be liquid polyester polyols, which preferably have a viscosity of 500 to 50,000 mPas at room temperature (about 25°C).

As suitable monomeric isocyanates for the TPU preferably polyisocyanates which contain two or three NCO groups are selected. They include well-known aliphatic, cyclo-aliphatic or aromatic monomeric diisocyanates. In preferred embodiments the at least one polyisocyanate is an aromatic polyisocyanate. Preferably isocyanates are selected from such with a molecular weight from 160 g/mol to 500 g/mol, for example aromatic polyisocyanates as 4,4'-diphenylmethanediisocyanate (MDI), 2,2'-diphenylmethane diisocyanate, diphenyl methane 2,4'-diisocyanate, 1,3-phenylenediisocyanate, 1,4-phenylenediisocyanate, naphthalene-1,5-diisocyanate (NDI), toluenediisocyanate (TDI), tetramethyl xylylene diisocyanate, toluene diisocyanate, naphthalene, di- and tetraalkyl diphenylmethane diisocyanate, 4,4'-dibenzyl diisocyanate, and combinations thereof.

Aliphatic isocyanates such as dodecane diisocyanate, dimer fatty acid diisocyanate, 4,4'-dibenzyldiisocyanate, 1,6-diisocyanato-2,2,4-trimethylhexane, butane-1,4-diisocyanate, hexane-1,6 diisocyanate (HDI), tetramethoxybutane-1,4-diisocyanate, dicyclohexylmethanediisocyanate, 1,12-diisocyanato-dodecane, cyclic diisocyanates such as 4,4-dicyclohexylmethanediisocyanate, 1,3-cyclohexane or 1,4-cyclohaxene diisocyanate, 1-methyl-2,4-diisocyanato-cyclohexane, 1-isocyanatomethyl-3-isocyanato-1,5,5-trimethylcyclohexane (isophorone diisocyanate, IPDI), hydrogenated or partly hydrogenated MDI ([H]12MDI (hydrogenated) or [H]6MDI (partly hydrogenated)), xylylenediisocyanate (XDI), tetramethyl-xylylenediisocyanate (TMXDI), di- and tetraalkylenediphenylmethane-diisocyanate can also be used.

Preferably diisocyanates with two NCO groups of different reactivity are selected from the group of the aromatic, aliphatic or cyclo-aliphatic diisocyanates. It is also possible to include at least partly oligomeric diisocyanates such as allophanate, carbodiimide, biuret condensation products from diisocyanates, e.g., from HDI, MDI, IPDI or other isocyanates. Mixtures of aliphatic or aromatic polyisocyanates can be used. More preferably aromatic diisocyanates are used.

The TPU according to the present invention comprises a substituted or unsubstituted diol which contains at least a primary and secondary OH group. In preferred embodiments the substituted or unsubstituted diol which contains at least a primary and a secondary OH group of step b) is a compound according to the following formula I: 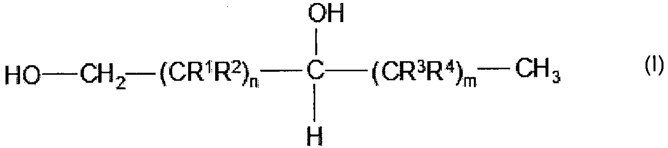 wherein
n = 0 to 10;
m = 0 to 15;
R¹ and R² are the same or different from each other and are selected from H, CN, COOR⁵, OR⁶, F, Cl, Br, substituted or unsubstituted alkyl, substituted or unsubstituted alkene, substituted or unsubstituted alkyne;
R³ and R⁴ are the same or different from each other and are selected from H, CN, COOR⁵, OR⁶, F, Cl, Br, substituted or unsubstituted alkyl, substituted or unsubstituted alkene, substituted or unsubstituted alkyne; and
R⁵ and R⁶ are H, substituted or unsubstituted alkyl.

Alkyl according to the present invention is preferably a C1 to C6 alkyl, more preferably a C1 to C4 alkyl.

Alkene according to the present invention is preferably a C2 to C6 alkene and more preferably a C2 to C4 alkene.

Alkyne according to the present invention is preferably a C2 to C6 and more preferably a C2 to C4 alkyne.

In preferred embodiments the substituent of the substituted alkyl, alkene or alkyne group is selected from alkyl, CN, F, Cl, Br. In more preferred embodiments it is a C1 to C4 alkyl. In most preferred embodiments it is a C1 to C2 alkyl.

In more preferred embodiments R¹ and R² are the same or different from each other and are selected from H, substituted or unsubstituted alkyl, substituted or unsubstituted alkene, or substituted or unsubstituted alkyne. In even more preferred embodiments R¹ and R² are the same or different from each other and are selected from H and unsubstituted alkyl. In the most preferred embodiment, R¹ and R² are the same or different from each other and are selected from H and an unsubstituted C1 to C4 alkyl.

In more preferred embodiments R³ and R⁴ are the same or different from each other and are selected from H, or substituted or unsubstituted alkyl, substituted or unsubstituted alkene, substituted or unsubstituted alkyne. In even more preferred embodiments R³ and R⁴ are the same or different from each other and are selected from H and unsubstituted alkyl. In most preferred embodiments, R³ and R⁴ are the same or different from each other and are selected from H and a C1 to C4 alkyl.

In preferred embodiments n is 0 to 6 and m is 0 to 4. In more preferred embodiments n is 0 to 4 and m is 0 to 3.

In preferred embodiments the diol of formula I is selected from the group consisting of 1,2-propanediol, 1,2-butanediol, 1,3-butanediol, 1,2-pentanediol, 1,3-pentanediol, 1,4-pentanediol, 2-methyl-1,3-propanediol, 2,2,4-trimethyl-1,3-pentanediol, 1,2-hexanediol, 1,3-hexanediol, 1,4-hexanediol, 1,5-hexanediol, 2-ethyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, and combinations thereof.

In preferred embodiments the diol of formula I has a number average molecular weight (Mₙ) of 600 g/mol or less. More preferred the Mₙ is in a range of 500 g/mol to 50 g/mol. Most preferred 300 g/mol to 50 g/mol.

The TPU can preferably further comprise a substituted or unsubstituted diol in step b) which contains at least two primary OH groups. In more preferred embodiments the diol which contains at least two primary OH groups is a compound of formula II:

OH-(CH₂)ₚ-OH (II)

wherein p is 2 to 18, more preferably 2 to 12, most preferably 2 to 8.

Optionally aliphatic polyols or polyether polyols or combinations thereof can be further comprised in the TPU according to the present invention.

Examples of aliphatic polyols are higher-functional alcohols such as, for example, glycerol, trimethylolpropane, pentaerythritol, as well as oligomeric ethers of the aforesaid substances with themselves or mixed with two or more of the aforesaid ethers.

A preferred polyol component is reaction products of low-molecular-weight polyfunctional alcohols with alkylene oxides (so-called polyether polyol). The alkylene oxides by preference have 2 to 4 carbon atoms. For example, the reaction products of ethylene glycol, propylene glycol, isomeric butanediols, hexanediol, or 4,4'-dihydroxydiphenylpropane with ethylene oxide, propylene oxide, butylene oxide, or mixtures thereof, are suitable. Also suitable, in addition, are the reaction products of polyfunctional alcohols, such as glycerol, trimethylolethane or trimethylolpropane, pentaerythritol, sugar alcohols, or mixtures thereof, with the aforesaid alkylene oxides. The polyether polyols are manufactured, in a manner known to one skilled in the art, by reacting the starting compound via a reactive hydrogen atom with the aforesaid alkylene oxides. Polyether alcohols of this kind are commercially obtainable. In a more preferred embodiment the at least one polyether polyol comprises a polyether triol having a number average molecular weight (Mₙ) of 200 to 10,000 g/mol, preferably 500 to 8,000 g/mol, most preferably 750 to 5,000 g/mol.

The hot melt adhesive compositions comprise at least one TPU according to the invention.

The hot melt adhesive according to the invention shall contain at least one TPU as disclosed above. An adhesive composition according to the invention preferably comprises of 50 to 99.9 wt-% of a TPU according to the invention. More preferably the composition comprises 60 to 95 wt.-% of a TPU, most preferably 75 to 90 wt.-%.

The hot melt adhesive composition may contain other additives which are known in the art. The term "additive" includes dyes, fillers (e.g., silicates, talcum, calcium carbonates, clays or carbon black), thixotropic agents (e.g., bentones, pyrogenic silicic acids, urea derivatives, fibrillated or pulp short fibers), color pastes and/or pigments, conductivity additives (e.g., conductivity carbon blacks or lithium perchlorate), plasticizers, tackifiers, other thermoplastic polymers, which are different from the polymer obtained in step b) according to the invention, stabilizers, adhesion promoters, rheological additives, waxes and any combination thereof.

The hot melt adhesive composition according to the present invention preferably comprises 0.1 to 50 wt.-% of additives, based on the total weight of the composition. In more preferred embodiments 5 to 40 wt.-%, most preferably 10 to 25 wt.-%, are contained. In even more preferred embodiments the additives are selected from stabilizers, adhesion promoters, plasticizers, tackifiers, thermoplastic polymers, which are different from the polymer obtained in step b), and combinations thereof.

The hot-melt adhesive compositions according to the invention may contain tackifiers, such as, e.g., resins derived from abietic acid, abietic acid esters, other rosin esters, polyterpene resins, terpene/phenolic resins, styrenated terpenes, poly-alpha-methylstyrene, alpha-methylstyrene-phenolic or aliphatic, aromatic or aromatic/ aliphatic hydrocarbon resins or coumarone/indene resins or resins derived from low molecular weight polyamides. These tackifying resins may optionally contain OH groups, to improve compatibility of the different components.

The hot melt adhesive composition according to the present invention preferably comprises 0.1 to 50 wt.-% of at least one tackifier, based on the total weight of the composition. In more preferred embodiments 5 to 40 wt.-%, most preferably 10 to 25 wt.-%, are contained.

The hot-melt adhesive compositions according to the invention may contain other thermoplastic polymers, which are different from the polymer obtained in step b) according to the present invention. These include but are not limited to EVA, rubber type polymers, styrene copolymers, polyester copolymers, polycarbonates, polyamides, acrylics and thermoplastic polyurethanes.

The hot melt adhesive composition according to the present invention preferably comprises 0.1 to 50 wt.-% of at least one other thermoplastic polymer, which is different from the polymer obtained in step b), based on the total weight of the composition. In more preferred embodiments 5 to 40 wt.-%, most preferably 10 to 25 wt.-%, are contained.

The hot-melt adhesive compositions according to the invention may contain plasticizers, provided that these plasticizers do not interfere with the hot melt capability of the adhesive - such as phthalates, benzoates, sucrose esters and sulphonamides. By way of example there may be mentioned the liquid phthalate plasticizers, plasticizers based on aromatic esters, such as, e.g., esters of benzoic acid, or also solid plasticizers such as dicyclohexyl phthalate, cyclohexane dimethanol dibenzoate and the like. Also suitable are other plasticizers such as sucrose acetate isobutyrate, ortho-/para-toluene sulphonamide or N-ethyl-ortho-toluene sulphonamide.

The hot melt adhesive composition according to the present invention preferably comprises 0.1 to 50 wt.-% of plasticizers, based on the total weight of the composition. In more preferred embodiments 5 to 40 wt.-%, most preferably 10 to 25 wt.-% are contained.

As stabilizers different components can be used such as antioxidants, UV stabilizers, hydrolysis stabilizers. Examples for these components are sterically hindered phenols of high molecular weight, sulphur-containing and phosphorus-containing phenols or amines. This include sterically hindered phenols, polyfunctional phenols, thioether, substituted benzotriazoles, hindered benzophenone and/or sterically hindered amines. Examples of hydrolysis stabilizers include oligomeric and/or polymeric aliphatic or aromatic carbodiimides. Such components are commercially available and known to the skilled person.

As adhesion promoters, preferably organofunctional silanes can be used, either in monomeric, oligomeric or polymeric form.

The hot melt adhesive composition according to the present invention preferably comprises 0.1 to 10 wt.-% of a compound selected from stabilizer and adhesion promoters or a combination thereof, based on the total weight of the composition. In more preferred embodiments 0.2 to 5 wt.-%, most preferably 0.5 to 3 wt.-% are contained.

The hot melt adhesive according to the invention shall contain at least one TPU as disclosed above. An adhesive composition according to the invention preferably comprises of 50 to 99.9 wt.-% of a TPU according to the invention. More preferably the composition comprises 60 to 95 wt.-% of a TPU, most preferably 75 to 90 wt.-%.

The manufacture of the adhesive composition can be performed as known in the art. The TPU according to the invention is manufactured and thereafter are blended with the different components and additives. This can be done in any known device, e.g., batch reactor, extruder, mixer, kneader or similar machines. It is also possible for some additives to be added to the polyester polyol before reaction with the isocyanate, provided that functional materials on the additives do not interfere with the reaction between polyol and isocyanate.

The adhesive according to the invention is a thermoplastic non-reactive hot melt and the TPU is preferably essentially free of unreacted and monomeric isocyanates. So the risk of using hazardous adhesives is reduced. Upon cooling the adhesive layer will form the cohesive and adhesive forces. As no chemical crosslinking is required to develop the full adhesive bond, this improves the ease of processing of products bonded with such hot melt adhesive.

The hot melt adhesive composition according to the present invention can be applied to a substrate in any know method for common TPU.

Additionally, the hot melt adhesive composition according to the present invention can be applied to a substrate with a method comprising the steps
1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

The melting temperature in step 1) is preferably below 160°C, more preferably below 150°.

The adhesive of the present invention can be used in all areas in which common hot melt adhesives are applied. Due to its properties the adhesive of the present invention is particularly useful in the bookbinding industry, wood bonding, flat lamination, flexible packaging, profile wrapping, edge banding, textile lamination, low pressure molding, and shoes.

### Example section

### Synthesis of TPU

Polyester polyol and antioxidant were placed in a round bottomed flange flask and heated to 80 °C under nitrogen. Vacuum was applied for 60 minutes (pressure about 0 mbar) to remove water. MDI was added under nitrogen and an exothermic reaction was observed (from about 80°C to about 125°C), and subsequently the oil bath temperature was increased to 110°C. The NCO content was determined by titration. The diol was added after the theoretical calculated NCO value had been reached, an exothermic reaction was observed (from about 110°C to about 145°C) and the oil bath temperature was increased to 140°C. After 3 hours, the isocyanate content was remeasured as <0.05%. Vacuum was applied for 60 minutes (pressure about 0 mbar) to degas the mixture.

The following measurement methods are employed in the present invention.

### Melt viscosity

Melt viscosity was measured using a Brookfield instrument (Brookfield DV-II+ Pro Viscometer) and thermocel (Thermosel Brookfield HT-60). About 10.5g g of adhesive were weighed into an aluminium cup which was placed in the sample chamber at 140 °C for about 15 minutes. Spindle no 27 was immersed into the adhesive and set to rotate. The first viscosity measurement was taken after allowing the adhesive to equilibrate for 30 minutes at 140°C.

The OH# was determined by titration according to Appendix 1 page 447 in "The Polyurethanes Handbook", editors David Randall and Steve Lee, John Wiley and Sons, 2002.

### Adhesion measurement

10g of adhesive were melted on a hot plate at 150°C for 30 minutes. The adhesive was applied with a thickness of 20 to 30 microns on to aluminised PET having a thickness of 27 microns. Immediately PE film with a thickness of 64 microns was placed on top and pressure was applied to laminate the films together using a roller and hand pressure.

The samples were allowed to equilibrate for 1 day at 23 °C, 50% relative humidity. The force of adhesion was measured using a Zwick instrument (Zwick Roell Machine 1445/test Control). Films of dimension 20mm wide x 350 mm long were cut and the ends of the film were clamped in the jaws of the instrument and the jaws were separated at a speed of 100 mm/minute. The force was measured to peel the films apart over a distance of 160 mm.

The following examples are not intended to limit the scope of the invention.

All numbers in the table are weight-%

| | C1 (comparative) | 1 | 2 | 3 |
|---|---|---|---|---|
| Polyester polyol A | 58.19 | 56.42 | 55.46 | 55.46 |
| MDI | 33.72 | 35.10 | 32.16 | 32.09 |
| 1,4-butanediol | 7.59 | | | |
| 1,3-butanediol | | 7.98 | | |
| 2-ethyl-1,3-hexanediol | | | 11.84 | |
| 2,2,4-trimethyl-1,3-pentanediol | | | | 11.91 |
| Irganox 1010 (antioxidant) | 0.50 | 0.50 | 0.54 | 0.54 |

Polyester polyol A is a copolymer of adipic acid, isophthalic acid, diethylene glycol and 1,2-propane diol.

For samples C1, 2 and 3, the OH# = 130 and Mₙ = 865 g/mol.

For sample 1, OH# = 139.5 and Mₙ = 805 g/mol.

| | C1 (comparative) | 1 | 2 | 3 |
|---|---|---|---|---|
| Melt viscosity (at 150 °C) | 588,750 | 40,670 | 23,950 | 30,500 |
| Peel strength (N per 15mm) | too viscous to apply coating | 1.2 | 7.2 | 3.5 |

## Claims

1. A hot melt adhesive composition comprising
i) at least one thermoplastic polyurethane, wherein the thermoplastic polyurethane is obtainable by a method comprising the steps of
a) reacting a mixture comprising at least one polyester polyol and at least one polyisocyanate; and
b) reacting the reaction product of step a) with at least one substituted or unsubstituted diol which contains at least a primary and a secondary OH group; and
ii) 0.1 to 50 wt.-% of at least one additive, based on the total weight of the composition.

2. The hot melt adhesive composition according to claim 1, wherein the substituted or unsubstituted diol which contains at least a primary and a secondary OH group of step b) is a compound according to the following formula I: 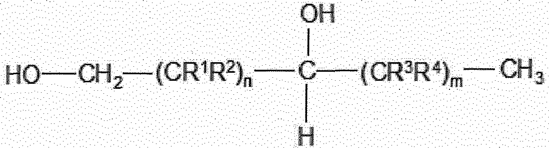 wherein
n = 0 to 10;
m = 0 to 15;
R¹ and R² are the same or different from each other and are selected from H, CN, COOR⁵, OR⁶, F, Cl, Br, substituted or unsubstituted alkyl, substituted or unsubstituted alkene, substituted or unsubstituted alkyne;
R³ and R⁴ are the same or different from each other and are selected from H, CN, COOR⁵, OR⁶, F, Cl, Br, substituted or unsubstituted alkyl, substituted or unsubstituted alkene, substituted or unsubstituted alkyne; and
R⁵ and R⁶ are H, substituted or unsubstituted alkyl.

3. The hot melt adhesive composition according to claim 2, wherein R¹ to R⁴ are the same or different from each other and are selected from H, and substituted or unsubstituted alkyl.

4. The hot melt adhesive composition according to claim 2 or 3, wherein n is 0 to 6 and m is 0 to 4.

5. The hot melt adhesive composition according to any one of claims 1 to 4, wherein the at least one polyester polyol of step a) comprises a polyester polyol having a number average molecular weight (Mₙ) of 200 to 10,000 g/mol.

6. The hot melt adhesive composition according to any one of claims 1 to 5, wherein the obtained thermoplastic polyurethane i) has a number average molecular weight (Mₙ) of from 2,500 to 80,000 g/mol.

7. The hot melt adhesive composition according to any one of claims 2 to 6, wherein the diol of formula I is selected from the group consisting of 1,2-propanediol, 1,2-butanediol, 1,3-butanediol, 1,2-pentanediol, 1,3-pentanediol, 1,4-pentanediol, 2-methyl-1,3-propanediol, 2,2,4-trimethyl-1,3-pentanediol, 1,2-hexanediol, 1,3-hexanediol, 1,4-hexanediol, 1,5-hexanediol, 2-ethyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, and combinations thereof.

8. The hot melt adhesive composition according to any of claims 1 to 7, wherein in step b) a further substituted or unsubstituted diol is comprised, which contains at least two primary OH groups.

9. The hot melt adhesive composition according to any of claims 1 to 8, wherein the mixture of step a) further comprises at least one polyether polyol, preferably the at least one polyether polyol comprises a polyether triol having a number average molecular weight (Mₙ) of 200 to 10,000 g/mol.

10. The hot melt adhesive composition according to any of claims 1 to 9, wherein the at least one polyisocyanate is an aromatic polyisocyanate.

11. The hot melt adhesive composition according to any of claims 1 to 10, wherein the at least one polyester polyol of step a) comprises an ortho-phthalate.

12. The hot melt adhesive composition according to any of claims 1 to 11, wherein the additive is selected from the group consisting of plasticizers, adhesion promoters, tackifiers, fillers, stabilizers, further thermoplastic polymers, which are different from the polymer obtained in step b) or any combination thereof.

13. A method of applying the hot melt adhesive composition according to any of claims 1 to 12 to a substrate, comprising the steps of
1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

14. Use of the hot melt adhesive composition according to any of claims 1 to 12 in bookbinding, wood bonding, flat lamination, flexible packaging, profile wrapping, edge banding, textile lamination, low pressure molding, and shoes.

## Patentansprüche

1. Schmelzklebstoffzusammensetzung, umfassend:
i) wenigstens ein thermoplastisches Polyurethan, wobei das thermoplastische Polyurethan durch ein Verfahren erhältlich ist, das die folgenden Schritte umfasst:
a) Umsetzen eines Gemischs, das wenigstens ein Polyesterpolyol und wenigstens ein Polyisocyanat umfasst; und
b) Umsetzen des Reaktionsprodukts aus Schritt a) mit wenigstens einem substituierten oder unsubstituierten Diol, das wenigstens eine primäre und eine sekundäre OH-Gruppe enthält; und
ii) 0,1 bis 50 Gew.-% wenigstens eines Additivs, bezogen auf das Gesamtgewicht der Zusammensetzung.

2. Schmelzklebstoffzusammensetzung nach Anspruch 1, wobei das substituierte oder unsubstituierte Diol, das wenigstens eine primäre und eine sekundäre OH-Gruppe enthält, aus Schritt b) eine Verbindung mit der folgenden Formel I ist: 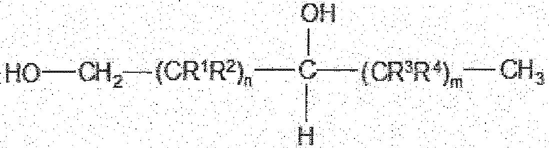 wobei
n = 0 bis 10;
m = 0 bis 15;
R¹ und R² gleich oder voneinander verschieden sind und ausgewählt sind aus H, CN, COOR⁵, OR⁶, F, Cl, Br, substituiertem oder unsubstituiertem Alkyl, substituiertem oder unsubstituiertem Alken, substituiertem oder unsubstituiertem Alkin;
R³ und R⁴ gleich oder voneinander verschieden sind und ausgewählt sind aus H, CN, COOR⁵, OR⁶, F, Cl, Br, substituiertem oder unsubstituiertem Alkyl, substituiertem oder unsubstituiertem Alken, substituiertem oder unsubstituiertem Alkin; und
R⁵ und R⁶ H, substituiertes oder unsubstituiertes Alkyl sind.

3. Schmelzklebstoffzusammensetzung nach Anspruch 2, wobei R¹ bis R⁴ gleich oder voneinander verschieden sind und ausgewählt sind aus H und substituiertem oder unsubstituiertem Alkyl.

4. Schmelzklebstoffzusammensetzung nach Anspruch 2 oder 3, wobei n 0 bis 6 ist und m 0 bis 4 ist.

5. Schmelzklebstoffzusammensetzung nach einem der Ansprüche 1 bis 4, wobei das wenigstens eine Polyesterpolyol aus Schritt a) ein Polyesterpolyol mit einem zahlenmittleren Molekulargewicht (Mₙ) von 200 bis 10.000 g/mol umfasst.

6. Schmelzklebstoffzusammensetzung nach einem der Ansprüche 1 bis 5, wobei das erhaltene thermoplastische Polyurethan i) ein zahlenmittleres Molekulargewicht (Mₙ) von 2.500 bis 80.000 g/mol aufweist.

7. Schmelzklebstoffzusammensetzung nach einem der Ansprüche 2 bis 6, wobei das Diol mit der Formel I ausgewählt ist aus der Gruppe bestehend aus 1,2-Propandiol, 1,2-Butandiol, 1,3-Butandiol, 1,2-Pentandiol, 1,3-Pentandiol, 1,4-Pentandiol, 2-Methyl-1,3-propandiol, 2,2,4-Trimethyl-1,3-pentandiol, 1,2-Hexandiol, 1,3-Hexandiol, 1,4-Hexandiol, 1,5-Hexandiol, 2-Ethyl-1,3-hexandiol, 1,2-Heptandiol, 1,3-Heptandiol, 1,4-Heptandiol, 1,5-Heptandiol, 1,6-Heptandiol, 1,2-Octandiol, 1,3-Octandiol, 1,4-Octandiol, 1,5-Octandiol, 1,6-Octandiol, 1,7-Octandiol sowie Kombinationen daraus.

8. Schmelzklebstoffzusammensetzung nach einem der Ansprüche 1 bis 7, wobei Schritt b) ein weiteres substituiertes oder unsubstituiertes Diol, welches wenigstens zwei primäre OH-Gruppen enthält, umfasst.

9. Schmelzklebstoffzusammensetzung nach einem der Ansprüche 1 bis 8, wobei das Gemisch aus Schritt a) ferner wenigstens ein Polyetherpolyol umfasst, vorzugsweise wobei das wenigstens eine Polyetherpolyol ein Polyethertriol mit einem zahlenmittleren Molekulargewicht (Mₙ) von 200 bis 10.000 g/mol umfasst.

10. Schmelzklebstoffzusammensetzung nach einem der Ansprüche 1 bis 9, wobei das wenigstens eine Polyisocyanat ein aromatisches Polyisocyanat ist.

11. Schmelzklebstoffzusammensetzung nach einem der Ansprüche 1 bis 10, wobei das wenigstens eine Polyesterpolyol aus Schritt a) ein ortho-Phthalat umfasst.

12. Schmelzklebstoffzusammensetzung nach einem der Ansprüche 1 bis 11, wobei das Additiv ausgewählt ist aus der Gruppe bestehend aus Weichmachern, Haftvermittlern, Klebrigmachern, Füllstoffen, Stabilisatoren, weiteren von dem in Schritt b) erhaltenen Polymer verschiedenen thermoplastischen Polymeren oder einer beliebigen Kombination daraus.

13. Verfahren zum Auftragen der Schmelzklebstoffzusammensetzung nach einem der Ansprüche 1 bis 12 auf ein Substrat, die folgenden Schritte umfassend:
1) Schmelzen der Schmelzklebstoffzusammensetzung in einem erwärmten Behälter ohne Rühren oder Scherung;
2) Pumpen der geschmolzenen Schmelzklebstoffzusammensetzung aus Schritt 1) unter Einsatz einer Getriebe- oder Kolbenpumpe durch einen erwärmten Schlauch; und
3) Auftragen der Schmelzklebstoffzusammensetzung auf das Substrat unter Einsatz einer Düse, einer Walze oder eines Sprühkopfs.

14. Verwendung der Schmelzklebstoffzusammensetzung nach einem der Ansprüche 1 bis 12 beim Buchbinden, Holzverkleben, Flachkaschieren, flexiblen Verpacken, Profilummanteln, Kantenanleimen, Textilkaschieren, Niederdruckgießen oder bei Schuhen.

## Revendications

1. Composition adhésive thermofusible contenant :
i) au moins un polyuréthane thermoplastique, le polyuréthane thermoplastique pouvant s'obtenir par un procédé comprenant les étapes de :
a) réaction d'un mélange comprenant au moins un polyester de polyol et au moins un isocyanate ; et
b) réaction du produit de réaction de l'étape a) avec au moins un diol substitué ou non-substitué contenant au moins un groupe OH primaire et un groupe OH secondaire ; et
ii) 0,1 à 50 % en poids d'au moins un additif, rapporté au poids total de la composition.

2. Composition adhésive thermofusible selon la revendication 1, dans laquelle le diol substitué ou non-substitué contenant au moins un groupe OH primaire et un groupe OH secondaire de l'étape b) est un composé selon la formule suivante I : 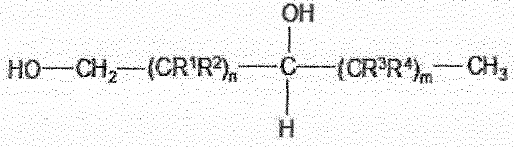 où
n = 0 à 10 ;
m = 0 à 15 ;
R¹ et R² sont identiques ou différents l'un de l'autre et sont choisis parmi H, CN, COOR⁵, OR⁶, F, Cl, Br, un alkyle substitué ou non-substitué, un alcényle substitué ou non-substitué, un alcynyle substitué ou non-substitué ;
R³ et R⁴ sont identiques ou différents l'un de l'autre et sont choisis parmi H, CN, COOR⁵, OR⁶, F, Cl, Br, un alkyle substitué ou non-substitué, un alcényle substitué ou non-substitué, un alcynyle substitué ou non-substitué ; et
R⁵ et R⁶ sont H, un alkyle substitué ou non-substitué.

3. Composition adhésive thermofusible selon la revendication 2, dans laquelle R¹ à R⁴ sont identiques ou différents les uns des autres et sont choisis parmi H, un alkyle substitué ou non-substitué.

4. Composition adhésive thermofusible selon la revendication 2 ou 3, dans laquelle n est entre 0 et 6 et m et entre 0 et 4.

5. Composition adhésive thermofusible selon l'une quelconque des revendications 1 à 4, dans laquelle l'au moins un polyester de polyol de l'étape a) contient un polyester de polyol ayant un poids moléculaire moyen en nombre (Mn) entre 200 et 10 000 g/mol.

6. Composition adhésive thermofusible selon l'une quelconque des revendications 1 à 5, dans laquelle le polyuréthane thermoplastique obtenu à l'étape i) a un poids moléculaire moyen en nombre (Mn) entre 2 500 et 80 000 g/mol.

7. Composition adhésive thermofusible selon l'une quelconque des revendications 2 à 6, dans laquelle le diol de formule I est choisi dans le groupe constitué de 1,2-propanediol, 1,2-butanediol, 1,3-butanediol, 1,2-pentanediol, 1,3-pentanediol, 1,4-pentanediol, 2-méthyl-1,3-propanediol, 2,2,4-triméthyl-1,3-pentanediol, 1,2-hexanediol, 1,3-hexanediol, 1,4-hexanediol, 1,5-hexanediol, 2-éthyl-1,3-hexanediol, 1,2-heptanediol, 1,3-heptanediol, 1,4-heptanediol, 1,5-heptanediol, 1,6-heptanediol, 1,2-octanediol, 1,3-octanediol, 1,4-octanediol, 1,5-octanediol, 1,6-octanediol, 1,7-octanediol, et des mélanges de ceux-ci.

8. Composition adhésive thermofusible selon l'une quelconque des revendications 1 à 7, dans laquelle, à l'étape b), il est compris un autre diol substitué ou non-substitué contenant au moins deux groupes OH primaires.

9. Composition adhésive thermofusible selon l'une quelconque des revendications 1 à 8, dans laquelle le mélange de l'étape a) contient en outre au moins un polyéther de polyol, l'au moins un polyéther de polyol comprenant de préférence un polyéther de triol ayant un poids moléculaire moyen en nombre (Mn) entre 200 et 10 000 g/mol.

10. Composition adhésive thermofusible selon l'une quelconque des revendications 1 à 9, dans laquelle l'au moins un polyisocyanate est un polyisocyanate aromatique.

11. Composition adhésive thermofusible selon l'une quelconque des revendications 1 à 10, dans laquelle l'au moins un polyester de polyol de l'étape a) contient un orthophtalate.

12. Composition adhésive thermofusible selon l'une quelconque des revendications 1 à 11, dans laquelle l'additif est choisi dans le groupe constitué de plastifiants, de promoteurs d'adhésion, d'épaississants, de charges, de stabilisants, d'autres polymères thermoplastiques différents du polymère obtenu à l'étape b), ou de toute combinaison de ceux-ci.

13. Procédé d'application de la composition adhésive thermofusible selon l'une quelconque des revendications 1 à 12 sur un substrat, comprenant les étapes de :
1) fusion de la composition adhésive thermofusible dans un récipient chauffé sans agitation ni cisaillement ;
2) pompage de la composition adhésive thermofusible de l'étape 1) via une pompe à engrenages ou une pompe à piston, à travers un manchon chauffé ; et
3) application de la composition adhésive thermofusible via une buse, un rouleau ou une tête de pulvérisation sur le substrat.

14. Utilisation de la composition adhésive thermofusible selon l'une quelconque des revendications 1 à 12 dans la reliure de livres, le collage de bois, le collage de surface, les emballages souples, le conditionnement de profilés, le bandage de chant, le laminage de textiles, le moulage basse pression, et les chaussures.
